Europäisches Patentamt

European Patent Office

Office européen des brevets

(11) Veröffentlichungsnummer: **0 007 386**
A1

## (12) EUROPÄISCHE PATENTANMELDUNG

(21) Anmeldenummer: **79101019.2**

(22) Anmeldetag: **04.04.79**

(51) Int. Cl.³: **F 16 B 13/06**
**F 16 B 37/06**

(30) Priorität: **29.06.78 DE 2828497**

(43) Veröffentlichungstag der Anmeldung:
**06.02.80 Patentblatt 80/3**

(84) Benannte Vertragsstaaten:
**BE CH FR GB IT NL**

(71) Anmelder: **Arthur Fischer Forschung**
**Weinhalde 14 - 18**
**D-7244 Waldachtal 3 (Tumlingen)(DE)**

(72) Erfinder: **Fischer, Arthur, Dr.h.c.**
**Weinhalde 34**
**D-7244 Waldachtal 3/Tumlingen(DE)**

(74) Vertreter: **Jung, Eugen et al,**
**C/o Arthur Fischer Forschung Weinhalde 14 - 18**
**D-7244 Waldachtal 3 (Tumlingen)(DE)**

(54) Schlagspreizdübel aus Metall.

(57) Die Erfindung bezieht sich auf einem Schlagspreizdübel aus Metall mit einem Spreizkonus (2) und ein Innengewinde (5) aufweisenden Bolzen (3), über den eine auf den Spreizkonus (2) auftreibbare, geschlitzte Spreizhülse (1) gestülpt ist, und hat zum Gegenstand, dass die Spreizhülse (1) die dem Spreizkonus (2) gegenüberliegende Stirnseite des Bolzens (3) um den Einschlagweg überragt, und das diese Stellung durch einen am Bolzen (3) oder an der Spreizhülse (1) angeordneten, der Verschiebung beider Teile einen beim Aufschlagen der Spreizhülse (1) auf den Spreizkonus (2) des Bolzens (3) überwindbaren Widerstand entgegensetzenden Vorsprung Ansatz oder dgl. (10, 12, 13) fixiert ist.

FIG. 1

## Schlagspreizdübel aus Metall

Die Erfindung betrifft einen Schlagspreizdübel aus Metall, mit einem einen Spreizkonus und ein Innengewinde aufweisenden Bolzen, über den eine auf den Spreizkonus auftreibbare, geschlitzte Spreizhülse gestülpt ist.

Ein bekannter Schlagspreizdübel besteht aus einer einstückigen Spreizhülse mit einer sich zum Einführende hin verjüngenden Dübelbohrung. Durch das Einschlagen eines sich ebenfalls zum Einführende hin verjüngenden Spreizkörpers in diese Dübelbohrung wird das Befestigungselement im Mauerwerk verankert.

Bei der Spreizhülse dieses bekannten Befestigungselementes handelt es sich um ein Drehteil, bei dem die sich verjüngende Dübelbohrung aus dem vollen Material durch ein spanabhebendes Arbeitsverfahren hergestellt ist. Wegen dem hohen Materialabfall muß bei dem bekannten Schlagspreizdübel somit eine aufwendige Herstellung der Spreizhülse in Kauf genommen werden.

Ein weiterer Nachteil des bekannten Schlagspreizdübels besteht darin, daß für das Einschlagen des Spreizkörpers in die sich verjüngende Dübelbohrung ein der jeweiligen Dübelbohrung angepaßtes Einschlagwerkzeug erforderlich ist.

Der Erfindung liegt die Aufgabe zugrunde, einen einfach herzustellenden Schlagspreizdübel zu schaffen, für dessen Verankerung kein besonderes Einschlagwerkzeug erforderlich ist.

Erfindungsgemäß wird dies dadurch erreicht, daß die Spreizhülse die dem Spreizkonus gegenüberliegende Stirnseite des Bolzens um den Einschlagweg überragt, und daß diese Stellung durch einen am Bolzen oder an der Spreizhülse angeordneten, der Verschiebung beider Teile einen beim Aufschlagen der Spreizhülse auf den Spreizkonus des Bolzens überwindbaren Widerstand entgegensetzenden Vorsprung, Ansatz oder dgl. fixiert ist.

- 2 -

Zur Verankerung des erfindungsgemäßen Dübels wird zunächst ein Bohrloch gebohrt, dessen Tiefe etwa der Bolzenlänge entspricht. Danach wird der Dübel in das Bohrloch eingesetzt. Durch den nach innen ragenden und an der Stirnseite des Bolzens anstoßenden Vorsprung der Spreizhülse, bzw. einem am Bolzen angeordneten und an der Stirnseite der Spreizhülse anstoßenden Vorsprung wird verhindert, daß die Spreizhülse bei einem auf den Bolzen wirkenden Einschiebwiderstand vorzeitig auf den Spreizkonus aufgeschoben wird, was eine das weitere Einschieben erschwerende Vorspreizung zur Folge hätte. Nach dem Aufsetzen des Bolzens am Bohrlochgrund wird durch Schläge auf die Spreizhülse der Vorsprung abgeschert bzw. zurückgedrückt, und durch Auftreiben der Spreizhülse auf den Spreizkonus des Bolzens der Dübel im Bohrloch verankert.

Das im Bolzen vorgesehene Innengewinde kann nun durch Eindrehen einer Kopfschraube zur Befestigung von Gegenständen, oder durch Eindrehen einer Gewindestange zur abgehängten Befestigung von Decken, Rohren und dgl. verwendet werden. Da der Lastangriff am Bolzen erfolgt, verstärkt sich mit zunehmendem Zug die Verankerungswirkung, was dem insbesondere bei der Deckenabhängung erforderlichen Sicherheitsbedürfnis entspricht.

In einer weiteren Gestaltung der Erfindung kann der Vorsprung durch eine Einprägung des Hülsenmantels gebildet sein. Diese Vorsprungsausbildung ist in einfacher Weise herstellbar. Beim Auftreiben der Spreizhülse auf den Spreizkonus wird die Ausbeulung wieder zurückgedrückt.

Eine andere Möglichkeit zur Gestaltung des Vorsprunges kann dadurch erfolgen, daß der Vorsprung durch einen vorzugsweise im Bereich des Längsschlitzes aus dem Hülsenmantel nach innen abgebogenen Lappen gebildet ist. Der Querschnitt des Lappens ist so zu wählen, daß dieser das Aufgleiten der Spreizhülse beim Einschieben des Dübels in das Bohrloch verhindert, jedoch ohne weiteres beim Aufsitzen des Bolzens durch Schläge auf die Spreizhülse abgeschert werden kann.

Durch die Gestaltung, daß die Spreizhülse ausgehend von ihrem dem Einführende entgegengesetzten Ende über einen Teil ihrer Länge gehärtet ist, wird verhindert, daß die Stirnseite der Spreizhülse beim Einschlagen gestaucht und damit beschädigt wird. Da der Spreizbereich der Hülse jedoch weich bleibt, läßt sich die Spreizhülse aufgrund ihrer elastischen und plastischen Verformbarkeit auch bei unregelmäßig gebohrten Bohrlöchern sehr leicht aufschlagen.

In einer weiteren Ergänzung der Erfindung kann der Bolzen eine Vertiefung vorzugsweise eine umlaufende Ringnut aufweisen, in die eine an der Hülse angeordnete vorsprungartige Nase, Einprägung oder dgl. eingreift. Durch diese Arretierung wird ebenfalls erreicht, daß sich Spreizhülse und Bolzen beim Einschieben in das Bohrloch nicht vorzeitig ineinanderschieben. Gleichzeitig sind durch die Arretierung Spreizhülse und Bolzen zu einer Einheit zusammengefaßt.

In der Zeichnung sind Ausführungsbeispiele der Erfindung dargestellt.

Es zeigen:

Figur 1    den im Bohrloch eingesetzten erfindungsgemäßen Schlagspreizdübel,

Figur 2    den Schlagspreizdübel nach Figur 1 im verankerten Zustand,

Figur 3    eine Variante der Vorsprungsgestaltung,

Figur 4    eine Fixierungsmöglichkeit von Bolzen und Spreizhülse.

- 4 -

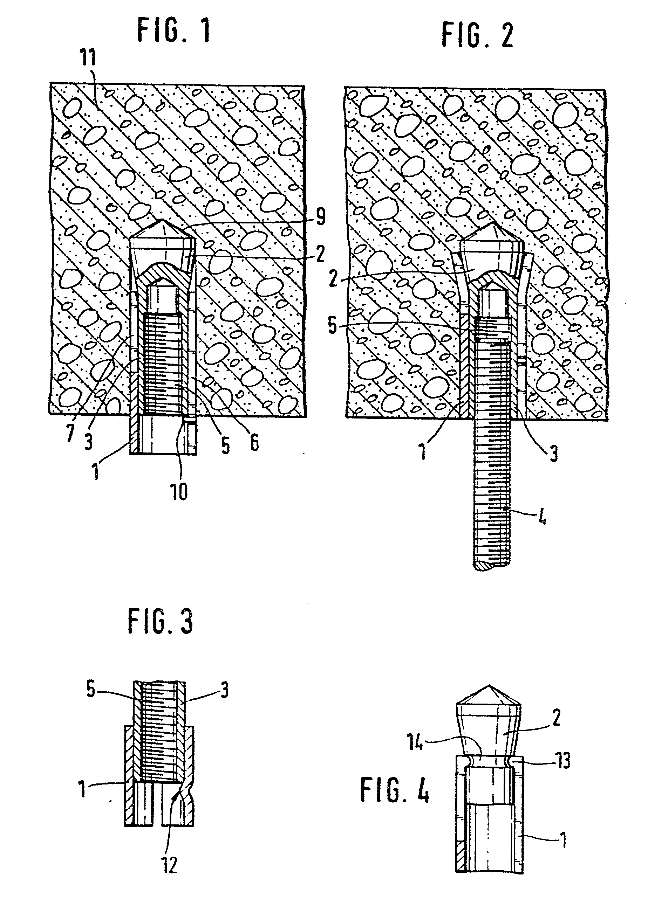

Der Schlagspreizdübel nach Figur 1 und 2 besteht aus einer Spreizhülse 1 und einem mit einem Spreizkonus 2 versehenen Bolzen 3, der zum Eindrehen einer Kopfschraube oder einer Gewindestange 4 ein Innengewinde 5 aufweist. Die Herstellung der Spreizhülse 1 erfolgt vorzugsweise durch Ausstanzen aus einer Blechplatine und anschließendem Zusammenrollen zu einer Hülse, wodurch ein durchgehender Schlitz 6 entsteht. Um das Auftreiben zu erleichtern, kann zweckmäßigerweise dem durchgehenden Schlitz gegenüber ein weiterer Schlitz 7 vorgesehen sein, der sich vom Einführende der Spreizhülse 1 über einen Teil deren Länge erstreckt. Ferner ist am Einführende der Spreizhülse eine Anschrägung vorgesehen, die das Aufgleiten auf den Spreizkonus 2 des Bolzens 3 erleichtert.

Die Vorspreizung der Spreizhülse 1 beim Einschieben des Dübels in das Bohrloch 9 wird auch bei größerem Einschiebwiderstand durch den aus dem Hülsenmantel nach innen abgebogenen und an der Stirnseite des Bolzens 3 anstoßenden Lappen 10 verhindert. Nach dem Einschieben des Dübels in das Bohrloch, dessen Tiefe etwa der Bolzenlänge entspricht, wird durch Schläge auf das den Bolzen 3 und die Mauerwerksoberfläche überragende Teil der Spreizhülse 1 der Dübel verankert. Die Länge des überstehenden Teiles entspricht etwa dem Einschlagweg, so daß die Verankerung abgeschlossen ist, wenn die Stirnseite der Hülse bündig mit der Oberfläche des Mauerwerks 11 abschließt. Um zu vermeiden, daß das überstehende Stück der Spreizhülse beim Einschlagen gestaucht wird, ist die Spreizhülse von ihrem dem Einführende entgegengesetzten Ende bis über einen Teil ihrer Länge gehärtet.

Figur 3 zeigt eine Variante der Vorsprungsgestaltung, bei der durch eine Einprägung des Hülsenmantels eine ins Hülseninnere ragende Ausbeulung 12 entsteht.

Figur 4 wiederum zeigt eine Variante, bei der die Spreizhülse 1 mit einer vorsprungartigen Nase 13 versehen ist, die zur Fixie-

- 5 -

rung von Spreizhülse und Bolzen beim Einschieben des Dübels in das Bohrloch sowie zur Schaffung einer Einheit, in eine als Ringnut ausgebildete Vertiefung 14 des Bolzens eingreift.

Artur Fischer Forschung

den 31. Januar 1979
Ju/Woe

- 1 -

EP 1385

## Patentansprüche

1. Schlagspreizdübel aus Metall mit einem einen Spreizkonus und ein Innengewinde aufweisenden Bolzen, über den eine auf den Spreizkonus auftreibbare, geschlitzte Spreizhülse gestülpt ist, dadurch gekennzeichnet, daß die Spreizhülse die dem Spreizkonus gegenüberliegende Stirnseite des Bolzens um den Einschlagweg überragt, und daß diese Stellung durch einen am Bolzen oder an der Spreizhülse angeordneten, der Verschiebung beider Teile einen beim Aufschlagen der Spreizhülse auf den Spreizkonus des Bolzens überwindbaren Widerstand entgegensetzenden Vorsprung, Ansatz oder dgl. fixiert ist.

2. Schlagspreizdübel nach Anspruch 1, dadurch gekennzeichnet, daß der Vorsprung durch eine Einprägung des Hülsenmantels gebildet ist.

3. Schlagspreizdübel nach Anspruch 1, dadurch gekennzeichnet, daß der Vorsprung durch einen vorzugsweise im Bereich des Längsschlitzes aus dem Hülsenmantel nach innen abgebogenen Lappen gebildet ist.

4. Schlagspreizdübel nach Anspruch 1, dadurch gekennzeichnet, daß die Spreizhülse ausgehend von ihrem dem Einführende entgegengesetzten Ende über einen Teil ihrer Länge gehärtet ist.

5. Schlagspreizdübel nach Anspruch 1, dadurch gekennzeichnet, daß der Bolzen eine Vertiefung vorzugsweise eine umlaufende Ringnut aufweist, in die eine an der Hülse angeordnete vorsprungartige Nase, Einprägung oder dgl. eingreift.

FIG. 1

FIG. 2

FIG. 3

FIG. 4

| | Europäisches Patentamt | EUROPÄISCHER RECHERCHENBERICHT | Nummer der Anmeldung |
|---|---|---|---|
| | | | EP 79 10 1019 |

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| X | US - A - 1 850 768 (PEIRCE) <br> * Seite 1, Zeilen 67-94 * <br><br> -- | 1,4,5 | F 16 B 13/06 <br> 37/06 |
| X | CH - A - 98.265 (ROHMER) <br> * Seite 2, linke Spalte, Zeilen 8-14,18-24; Abbildung 3 * <br><br> -- | 1,3,5 | |
| | US - A - 2 171 985 (STAR EXPANSION BOLT) <br> * Seite 2, rechte Spalte, Zeilen 27-34; Abbildungen 13,14 * <br><br> -- | 1 | RECHERCHIERTE SACHGEBIETE (Int Cl. 3) |
| | CH - A - 107 822 (POIRIER) <br> * Seite 2, linke Spalte, Zeilen 6-10 * <br><br> -- | 1 | F 16 B 13/00 <br> 37/00 |
| A | CH - A - 411 469 (FISCHER) | | |
| A | CH - A - 457 045 (FISCHER) | | |
| A | US - A - 1 621 598 (PHILLIPS) | | |
| A | US - A - 2 120 279 (NATIONAL LEAD COMPANY) | | KATEGORIE DER GENANNTEN DOKUMENTE |
| A | GB - A - 602 559 (ALM) | | X: von besonderer Bedeutung <br> A: technologischer Hintergrund <br> O: nichtschriftliche Offenbarung <br> P: Zwischenliteratur |
| A | GB - A - 634 116 (UNITED CARR FASTENER) | | T: der Erfindung zugrunde liegende Theorien oder Grundsätze |
| A | FR - A - 2 020 109 (E.T.E.M.) | | E: kollidierende Anmeldung <br> D: in der Anmeldung angeführtes Dokument |
| A | FR - E - 44 448 (POSTEL) <br><br> ---- | | L: aus andern Gründen angeführtes Dokument <br> &: Mitglied der gleichen Patentfamilie, übereinstimmendes Dokument |

Der vorliegende Recherchenbericht wurde für alle Patentansprüche erstellt

| Recherchenort | Abschlußdatum der Recherche | Prüfer |
|---|---|---|
| Den Haag | 24-09-1979 | SEIFRIDSBERGER |

EPA form 1503.1 06.78